# EUROPEAN PATENT APPLICATION

(11) **EP 4 438 818 A1**
(43) Date of publication of application: **02.10.2024**
(21) Application number: 22932503.0
(22) Date of filing: 19.12.2022
(51) Int. Cl.: E02F 9/16, B60N 3/04

(54) **CONSTRUCTION MACHINE**

(30) Priority: 25.03.2022 JP 2022049879
(71) Applicant: Hitachi Construction Machinery Tierra Co., Ltd., Shiga 528-0061, (JP)
(72) Inventor: KISHIMOTO, Naoya, Koka-shi, Shiga 528-0061 (JP); IWAMOTO, Yohei, Koka-shi, Shiga 528-0061 (JP); MAEDA, Kohei, Koka-shi, Shiga 528-0061 (JP); JANG, Jaejoon, Koka-shi, Shiga 528-0061 (JP)
(74) Representative: Manitz Finsterwald Patent- und Rechtsanwaltspartnerschaft mbB
(86) International application number: PCT/JP2022/046598
(87) International publication number: WO 2023/181533

(57) **Abstract**

A hydraulic excavator (1) includes a floor member (9) forming a foothold on the periphery of an operator's seat (10), a floor mat (22) covering an upper surface of the floor member (9) and a traveling operation device (12) provided forward of the operator's seat (10), and the traveling operation device (12) includes a left traveling pedal (17) and a right traveling pedal (20), each rotatively operated about a rotation fulcrum in the front-rear direction, and a left traveling lever (18) integrally mounted on the left traveling pedal (17) and a right traveling lever (21) integrally mounted on the right traveling pedal (20) . A left projecting member (28) and a right projecting member (29), each projecting upward from the floor mat (22) and inhibiting obstructions such as the toes of an operator from getting stuck in a gap between the left traveling pedal (17) and the right traveling pedal (20), and the floor mat (22), are provided between a rotation fulcrum of the left traveling pedal (17) and the right traveling pedal (20), and the operator's seat (10).

## Description

### TECHNICAL FIELD

The present disclosure relates to a construction machine such as a hydraulic excavator, and more particularly, to a construction machine provided with a floor mat on the periphery of an operator's seat.

### BACKGROUND ART

A hydraulic excavator, serving as a typical construction machine, is roughly composed of a self-propelled vehicle body and a working mechanism provided on the vehicle body. The vehicle body of the hydraulic excavator includes a lower traveling structure and an upper revolving structure mounted rotatably on the lower traveling structure, with the upper revolving structure provided with a cab defining an operator's seat. An operator's seat for an on-board operator to be seated and a floor member forming a foothold on the periphery of the operator's seat are provided inside the cab and an upper surface of the floor member is covered with a floor mat.

A traveling operation device for controlling the traveling operation of the lower traveling structure is provided forward of the operator's seat. The traveling operation device includes left and right traveling pedals rotating about a rotation fulcrum in the front-rear direction and left and right traveling levers whose base ends are fixed to the left and right traveling pedals and whose tip ends extend upward. An operator seated in the operator's seat controls the traveling operation of the lower traveling structure by depressing the traveling pedals or manually operating the traveling levers (Patent Document 1).

### PRIOR ART DOCUMENT

### PATENT DOCUMENT

Patent Document 1: Japanese Patent Laid-Open No. 2007-050720 A

### SUMMARY OF THE INVENTION

Herein, when an operator manually operates a traveling lever to incline the lever forward, a traveling pedal inclines forward about a rotation fulcrum to raise a rear side of the traveling pedal upward. Thus, in a case where the operator happens to move the foot/feet over a floor mat, for example, obstructions such as the toes of the operator or tools, documents and plastic bottles falling onto the floor mat can get stuck in a gap between the rear side of the traveling pedal and the floor mat. This hazard unfortunately inhibits the operator from smoothly operating the traveling pedal or the traveling lever.

It is an object of the present invention to provide a construction machine capable of inhibiting obstructions from getting stuck in a gap between a traveling pedal and a floor mat.

A construction machine according to the present invention includes: a self-propelled vehicle body; an operator's seat provided on the vehicle body; a floor member forming a foothold on the periphery of the operator's seat; a floor mat covering an upper surface of the floor member; and a pedal provided forward of the operator's seat and rotatively operated about a rotation fulcrum in the front-rear direction to control the traveling drive for the vehicle body, characterized in that a projecting member projecting upward from the floor mat is provided between the rotation fulcrum of the pedal and the operator's seat and at a position corresponding to an end portion on the operator's seat side of the pedal on the floor member in a top face view.

According to the present invention, even when a rear end of the pedal is raised upward from the upper surface of the floor mat, obstructions such as the toes of an operator abut the projecting member. This mechanism can inhibit obstructions from getting stuck in a gap between the pedal and the floor mat.

### BRIEF DESCRIPTION OF THE DRAWINGS

Fig. 1 is a left side view showing a hydraulic excavator according to a first embodiment of the present invention.
Fig. 2 is an enlarged perspective view of an operator' s seat, a traveling operation device, a floor mat, a projecting member and others inside a cab.
Fig. 3 is a plan view of the traveling operation device, the floor mat, the projecting member and others viewed from above.
Fig. 4 is an enlarged perspective view of an operator' s seat, a traveling operation device, a floor mat, a projecting member and others without a left traveling pedal and a left traveling lever, which is similar to Fig. 2.
Fig. 5 is a perspective view of a single floor mat.
Fig. 6 is a side view of a pilot valve, a traveling lever, a traveling pedal and others.
Fig. 7 is a side view of a pilot valve, a traveling lever, a traveling pedal, a floor mat and others.
Fig. 8 is an enlarged perspective view of an operator' s seat, a traveling operation device, a floor mat, a projecting member and others according to a second embodiment of the present invention, which is similar to Fig. 2.
Fig. 9 is a perspective view of a single floor mat according to the second embodiment.
Fig. 10 is an enlarged perspective view of an operator's seat, a traveling operation device, a floor mat, a projecting member and others according to a modification, which is similar to Fig. 2.

### MODE FOR CARRYING OUT THE INVENTION

An embodiment of a construction machine of the present invention will be described in detail with reference to the attached drawings by way of the cases applied to hydraulic excavators. In the embodiment, the running direction of a hydraulic excavator is defined as front-and-rear direction, and the direction perpendicular to the running direction is defined as right-and-left direction.

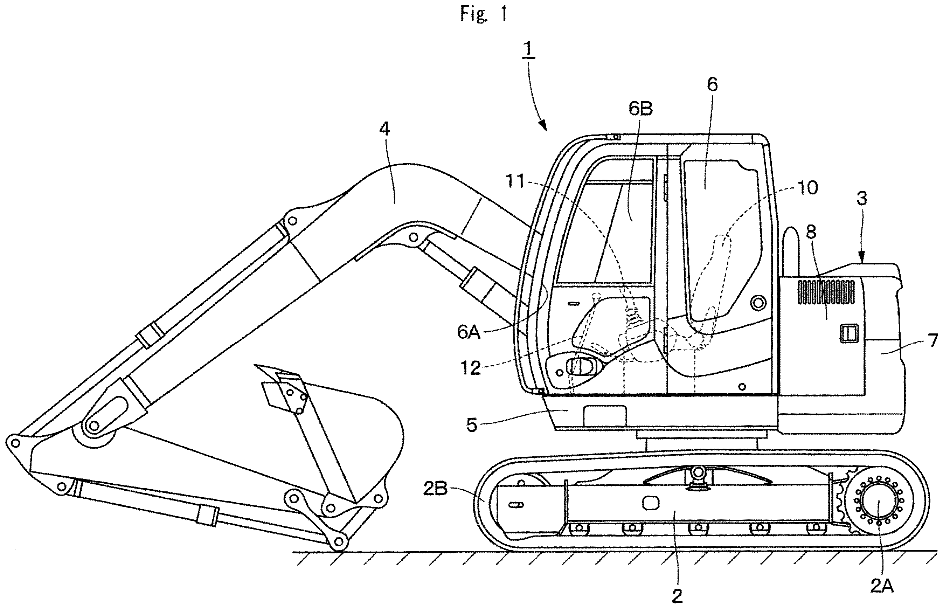

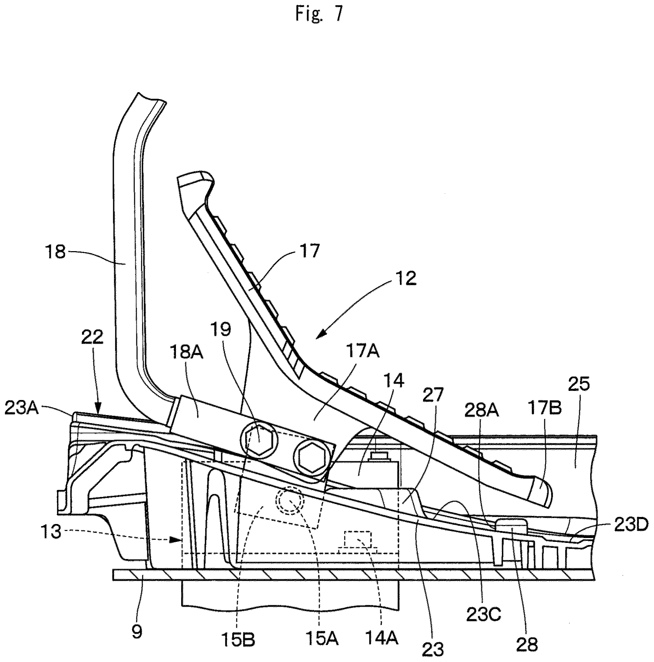

Figs. 1 to 7 illustrates a construction machine according to a first embodiment of the present invention. In Fig. 1, a hydraulic excavator 1 is configured to include a self-propelled crawler type lower traveling structure 2, an upper revolving structure 3 mounted rotatably on the lower traveling structure 2, and a working mechanism 4 provided on a front side of the upper revolving structure 3. The lower traveling structure 2 and the upper revolving structure 3 constitute a vehicle body of the hydraulic excavator 1. The lower traveling structure 2 has left and right traveling motors 2A composed of a hydraulic motor and left and right crawler belts 2B (shown only on the left side). The traveling motor 2A of the lower traveling structure 2 is rotatively driven in response to the operation of a later-described traveling operation device 12 to allow the crawler belt 2B to revolve and the hydraulic excavator 1 to travel.

The upper revolving structure 3 is configured to include a revolving frame 5 that is to be a base, a cab 6 mounted on a front left side of the revolving frame 5, a counterweight 7 provided at a rear end of the revolving frame 5, and an exterior cover 8 provided on a front side of the counterweight 7. The cab 6 defines an operator's room for an on-board operator. An entrance way 6A for the operator to get on/off the cab 6 and a door 6B opening and closing the entrance way 6A are provided on a left surface of the cab 6. The counterweight 7 takes a weight balance with the working mechanism 4 provided forward of the revolving frame 5. The exterior cover 8 covers on-board equipment such as a prime mover, a hydraulic pump and a control valve (each not shown) mounted on the revolving frame 5.

An outer peripheral surface (rear surface) of the counterweight 7 is formed in an arc about a revolving center of the upper revolving structure 3, and the counterweight 7 is disposed to be closer to the revolving center of the upper revolving structure 3. As a result, the outer peripheral surface of the counterweight 7 is accommodated within 120% of a vehicle width of the lower traveling structure 2 when the upper revolving structure 3 of the hydraulic excavator 1 revolves on the lower traveling structure 2. Thus, the hydraulic excavator 1 is configured as a rear ultra small sized revolving hydraulic excavator.

A floor member 9, an operator's seat 10, a control lever device 11, a traveling operation device 12 and the like are provided inside the cab 6. The floor member 9 is mounted on a left front side of the revolving frame 5 to form a foothold for the on-board operator in the cab 6. An operator's seat support platform 9A is provided on a rear side of the floor member 9.

The operator's seat 10 is provided on the operator's seat support platform 9A of the floor member 9. The operator's seat 10 is provided for the operator operating the hydraulic excavator 1 to be seated, and the floor member 9 forms a foothold on the periphery of the operator' s seat 10. Left and right control lever devices 11 (shown only on the left side) are provided on left and right sides of the operator's seat 10, respectively. The control lever device 11 is manually operated by the operator to control the revolving operation of the upper revolving structure 3 and the operation of the working mechanism 4.

The traveling operation device 12 is located forward of the operator' s seat 10, provided on the floor member 9 and operated by the operator to control the traveling operation of the lower traveling structure 2. The traveling operation device 12 is configured to include a pilot valve 13, a left traveling pedal 17 and a left traveling lever 18, and a right traveling pedal 20 and a right traveling lever 21. The left traveling pedal 17 and the left traveling lever 18, and the right traveling pedal 20 and the right traveling lever 21 are symmetrically disposed with respect to the center line of the operator's seat 10 in the right-and-left direction.

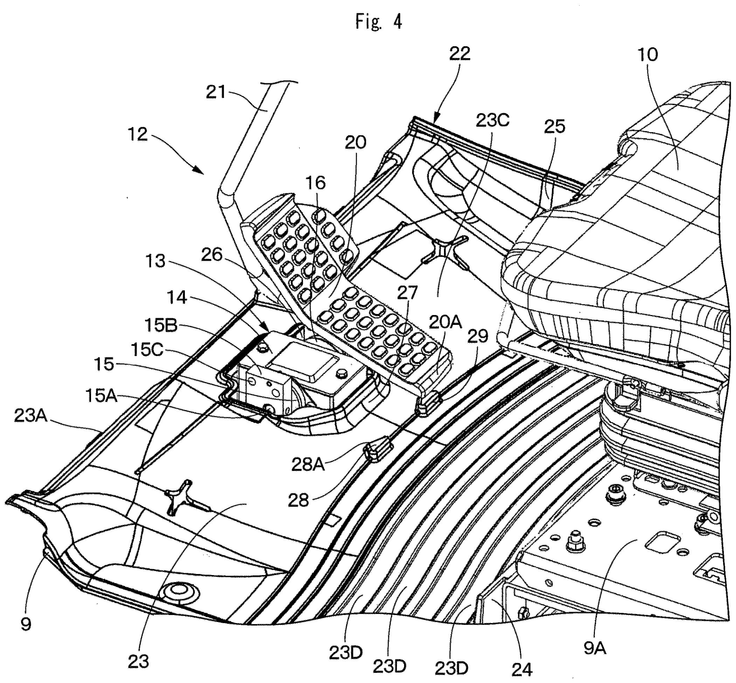

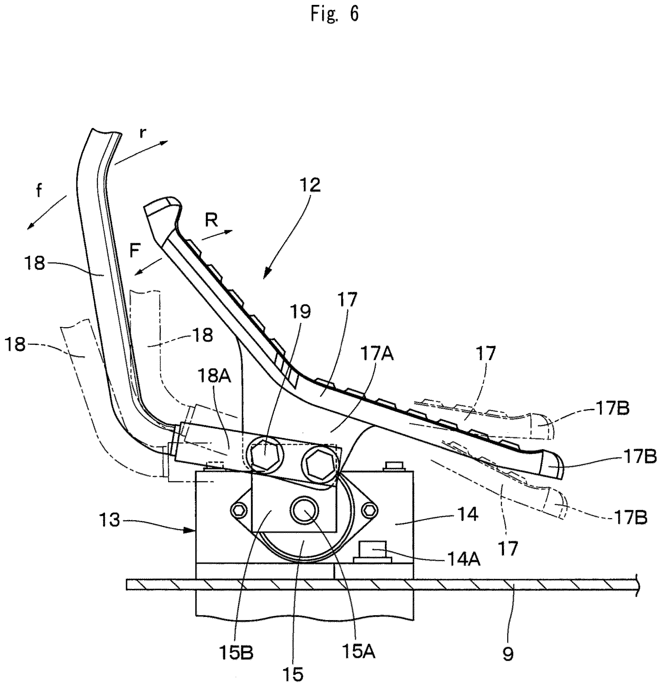

The hydraulic excavator 1 is provided with a control valve (not shown) controlling supply and discharge of pressurized oil to a hydraulic actuator. The pilot valve 13 outputs to the control valve a pilot signal (pilot pressure) for controlling supply and discharge of pressurized oil to the left and right traveling motors 2A. As shown in Figs. 4 and 6, the pilot valve 13 has a valve body portion 14, a left traveling operation portion 15, and a right traveling operation portion 16. The valve body portion 14 is disposed on the center line of the operator's seat 10 in the right-and-left direction and mounted on the floor member 9 with bolts 14A. The left traveling operation portion 15 is provided on a left surface of the valve body portion 14, and the right traveling operation portion 16 is provided on a right surface of the valve body portion 14.

The left traveling operation portion 15 has a rotational shaft 15A whose axis center extends in the right-and-left direction, and the rotational shaft 15A rotates in the front-rear direction. A rectangular operating tool mounting member 15B is mounted on the rotational shaft 15A, with two bolt holes (female screw holes) 15C formed on the operating tool mounting member 15B. Meanwhile, the right traveling operation portion 16, as with the left traveling operation portion 15, has a rotational shaft and an operating tool mounting member, and two bolt holes are formed on the operating tool mounting member (each not shown) .

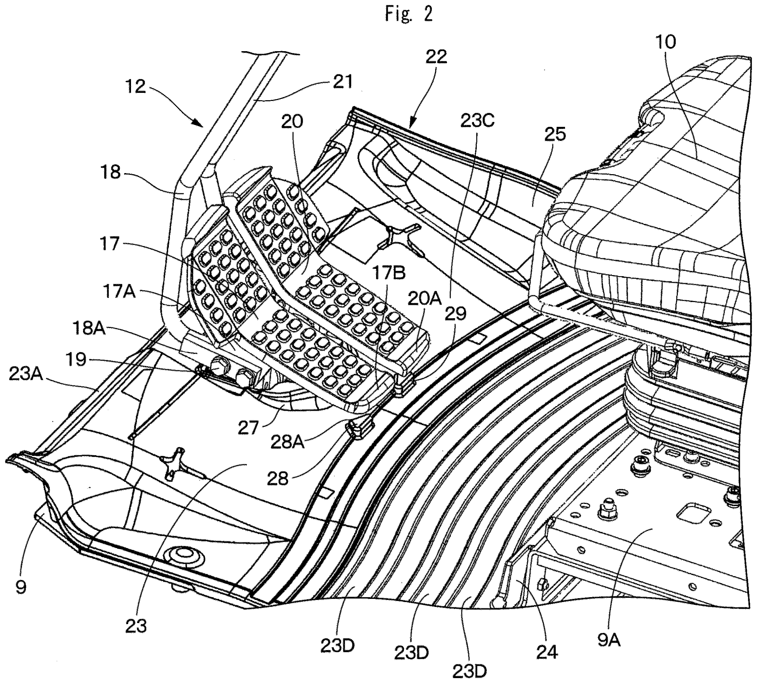

The left traveling pedal 17 is provided at the left traveling operation portion 15 of the pilot valve 13 and operated by the operator to depress. As shown in Figs. 2 and 6, a plate-shaped mounting plate 17A extending downward is provided on a lower surface of the left traveling pedal 17. Two bolt through holes (not shown) corresponding to the bolt holes 15C formed on the operating tool mounting member 15B are formed on the mounting plate 17A. The left traveling pedal 17 is composed of a plate body extending in the front-rear direction, and an end portion thereof located on the operator's seat 10 side is a rear end 17B.

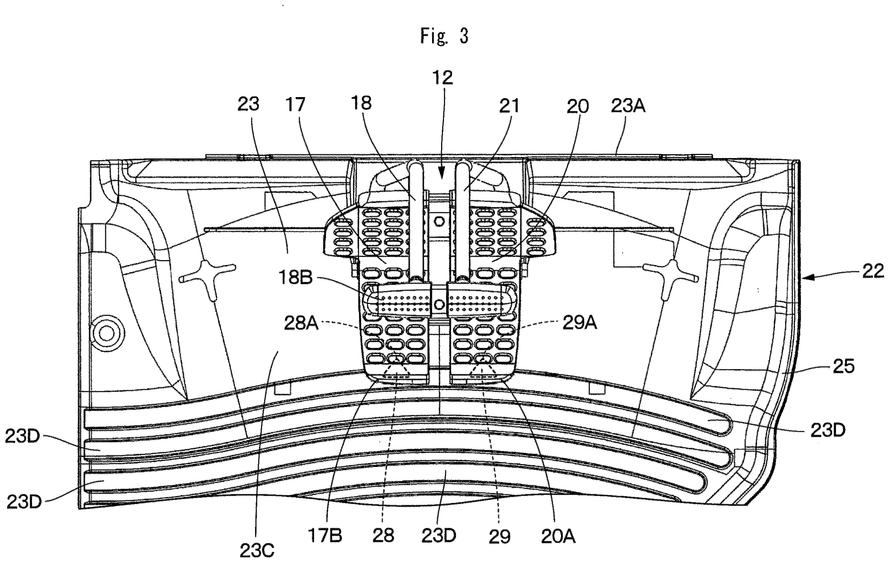

The left traveling lever 18 is provided at the left traveling operation portion 15 of the pilot valve 13 together with the left traveling pedal 17, and is manually operated by the operator. The left traveling lever 18 is formed as a bar-shaped member overall extending in the vertical direction by bending a pipe material and the like. A mounting plate 18A is provided at a base end (lower end) of the left traveling lever 18, and two bolt through holes (not shown) corresponding to the bolt holes 15C formed on the operating tool mounting member 15B are formed on the mounting plate 18A. A grip 18B for the operator to grip is provided at a tip end (upper end) of the left traveling lever 18 (see Fig. 3).

The left traveling pedal 17 and the left traveling lever 18 are integrally mounted (co-tightened) on the operating tool mounting member 15B of the left traveling operation portion 15 with two bolts 19. That is, the bolts 19 are inserted into a bolt hole provided on the mounting plate 18A of the left traveling lever 18 and a bolt hole formed on the mounting plate 17A of the left traveling pedal 17 to threadedly engage these two bolts 19 with the bolt holes 15C of the operating tool mounting member 15B. As a result, the left traveling pedal 17 and the left traveling lever 18 are integrally mounted at the left traveling operation portion 15 (operating tool mounting member 15B) to allow for revolution in the front-rear direction, with the rotational shaft 15A of the left traveling operation portion 15 serving as a rotation fulcrum.

That is, the left traveling pedal 17 and the left traveling lever 18 are held at a neutral position shown by solid line in Fig. 6 in a non-operating state where the pedal and the lever are not operated. Meanwhile, the left traveling pedal 17 and the left traveling lever 18, when the operator seated in the operator's seat 10 depresses the left traveling pedal 17 in a forward direction (shown by an arrow F in Fig. 6) or manually operates the left traveling lever 18 in a forward direction (shown by an arrow f in Fig. 6), will be displaced to a front inclined posture (posture shown by a chain line in Fig. 6), with the rotational shaft 15A serving as a rotation fulcrum. This mechanism allows a pilot signal rotating the left traveling motor 2A from the pilot valve 13 in the forward direction to be outputted and pressurized oil discharged from the hydraulic pump to be supplied to a forward side of the left traveling motor 2A via the control valve.

In addition, the left traveling pedal 17 and the left traveling lever 18, when the operator depresses the left traveling pedal 17 in a backward direction (shown by an arrow R) or manually operates the left traveling lever 18 in a backward direction (shown by an arrow r) , will be displaced to a rear inclined posture (posture shown by a two-dot chain line in Fig. 6), with the rotational shaft 15A serving as the rotation fulcrum. This mechanism allows a pilot signal rotating the left traveling motor 2A from the pilot valve 13 in the backward direction to be outputted and pressurized oil discharged from the hydraulic pump to be supplied to a backward side of the left traveling motor 2A via the control valve.

The right traveling pedal 20 and the right traveling lever 21 are mounted at the right traveling operation portion 16 of the pilot valve 13, as with the left traveling pedal 17 and the left traveling lever 18. The right traveling pedal 20 is composed of a plate body extending in the front-rear direction, and an end portion thereof located on the operator's seat 10 side is a rear end 20A. The right traveling pedal 20 and the right traveling lever 21, when the operator seated in the operator's seat 10 depresses the right traveling pedal 20 in the forward direction or manually operates the right traveling lever 21 in the forward direction, will be displaced to a front inclined posture, with a rotational shaft (not shown) of the right traveling operation portion 16 serving as a rotation fulcrum. This mechanism allows a pilot signal rotating a right traveling motor (not shown) from the pilot valve 13 in the forward direction to be outputted and pressurized oil discharged from the hydraulic pump to be supplied to a forward side of the right traveling motor via the control valve.

Also, the right traveling pedal 20 and the right traveling lever 21, when the operator depresses the right traveling pedal 20 in the backward direction or manually operates the right traveling lever 21 in the backward direction, will be displaced to a rear inclined posture, with the rotational shaft (not shown) of the right traveling operation portion 16 serving as a rotation fulcrum. This mechanism allows a pilot signal rotating the right traveling motor from the pilot valve 13 in the backward direction to be outputted and pressurized oil discharged from the hydraulic pump to be supplied to a backward side of the right traveling motor via the control valve.

Subsequently, a floor mat 22 used in the first embodiment will be described with reference to Figs. 2 to 5.

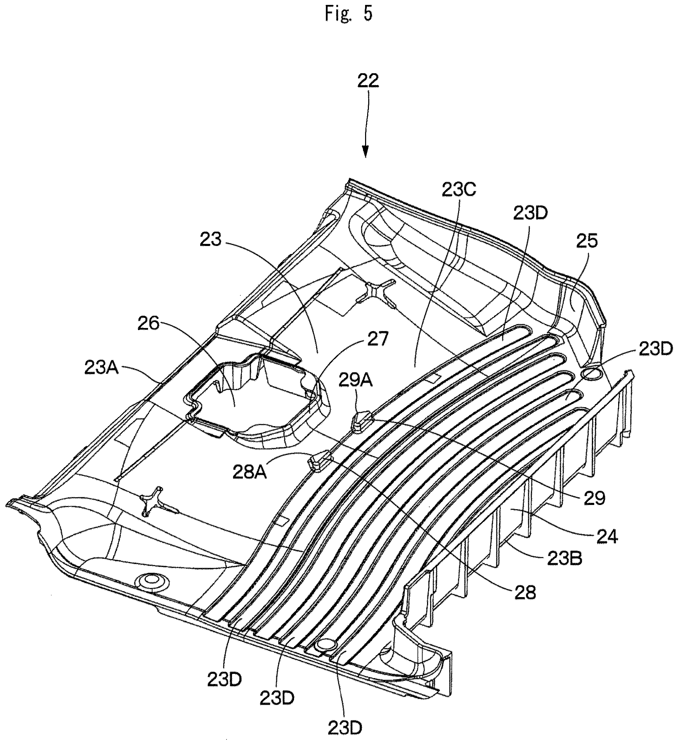

The floor mat 22 is disposed forward of the operator's seat 10 to cover an upper surface of the floor member 9. The floor mat 22 is formed from an elastic rubber material and a resin material, for example, and mounted detachably on the floor member 9. As shown in Fig. 5, the floor mat 22 is configured to include a central mat portion 23, a rear wall 24, a right wall 25, a pilot valve insert opening 26, a peripheral wall 27, a later-described left projecting member 28 and a right projecting member 29.

The central mat portion 23 of the floor mat 22 covers an area of the floor member 9 forward of the operator' s seat support platform 9A. An upper surface of the central mat portion 23 is in contact with the sole of the operator's foot/feet, and forms an inclined surface 23C running downward from a front end 23A toward a rear end 23B. This configuration allows earth and sand falling onto the floor mat 22 to move from the front end 23A side of the central mat portion 23 along the inclined surface 23C to the rear end 23B side. A plurality of grooves 23D gradually curved and extending in the right-and-left direction is provided on the rear end 23B side on the upper surface of the central mat portion 23. The plurality of grooves 23D has the function of slip resistance when an on-board operator in the cab 6 places the foot/feet on the floor mat 22 and the function of guiding earth and sand falling onto the floor mat 22 to the entrance way 6A of the cab 6 to sweep the earth and sand away to the outside of the cab 6. As a result, a left end of the groove 23D disposed on the entrance way 6A side of the cab 6 is open to the outside.

The rear wall 24 is integrally provided at the rear end 23B of the central mat portion 23. The rear wall 24 rises upward from the rear end 23B of the central mat portion 23 and extends in the right-and-left direction. The right wall 25 is integrally provided at a right end of the central mat portion 23. The right wall 25 rises upward from the right end of the central mat portion 23 and extends in the front-rear direction. The rear wall 24 and the right wall 25 surround the central mat portion 23 to inhibit earth and sand falling onto the central mat portion 23 from scattering around the floor mat 22.

The pilot valve insert opening 26 is provided on the front end 23A side of the central mat portion 23. The pilot valve insert opening 26 is formed as an overall rectangular hole, and disposed at a position corresponding to the pilot valve 13 mounted on the floor member 9. This configuration allows the pilot valve 13 to be inserted into the pilot valve insert opening 26 and an upper side of the valve body portion 14, the left traveling operation portion 15 and the right traveling operation portion 16 constituting the pilot valve 13 to project to the upper surface side of the floor mat 22 (central mat portion 23) via the pilot valve insert opening 26.

The peripheral wall 27 is provided at a peripheral portion of the pilot valve insert opening 26. The peripheral wall 27 projects upward from the peripheral portion of the pilot valve insert opening 26 and entirely surrounds the pilot valve insert opening 26. Since the upper surface of the central mat portion 23 forms the inclined surface 23C running downward from the front end 23A toward the rear end 23B, the length of the peripheral wall 27 projecting from the upper surface of the central mat portion 23 gradually increases from the front end 23A side of the central mat portion 23 toward the rear end 23B side. The peripheral wall 27 inhibits earth and sand falling onto the central mat portion 23 from scattering downward through the pilot valve insert opening 26 to protect the pilot valve 13 from the earth and sand.

The left projecting member 28 and the right projecting member 29 are integrally provided at the central mat portion 23 of the floor mat 22. As shown in Figs. 2 and 3, the left projecting member 28 is disposed between the rotational shaft 15A of the left traveling operation portion 15 serving as the rotation fulcrum of the left traveling pedal 17 and the operator's seat 10, and specifically at a position corresponding to the left traveling pedal 17 and between the peripheral wall 27 and the operator's seat 10. In addition, the left projecting member 28 and the right projecting member 29 are disposed so as not to be formed continuously with the peripheral wall 27, but at a constant interval rearward of the peripheral wall 27. The left projecting member 28 has an apex portion 28A formed in a triangle block projecting from the upper surface of the central mat portion 23 and tapering from the operator's seat 10 toward the rotation fulcrum of the left traveling pedal 17 (the rotational shaft 15A of the left traveling operation portion 15). Herein, the upper surface of the central mat portion 23 is in contact with the sole of the operator's foot/feet, while an upper surface of the left projecting member 28 is not in contact with the sole of the operator's foot/feet during normal operations.

The left projecting member 28 inhibits obstructions such as the operator's toes, and tools and documents falling onto the floor mat 22 (hereinafter described as a case of the operator's toes) from getting stuck in a large gap formed between the rear end 17B of the left traveling pedal 17 and the floor mat 22 after the left traveling lever 18 is operated in a forward direction to allow the left traveling pedal 17 to be in the front inclined posture (posture shown by a chain line in Fig. 6) . Further, the length of the left projecting member 28 projecting from the upper surface of the central mat portion 23 is set as a length securing a small gap between the rear end 17B of the left traveling pedal 17 and an upper end of the left projecting member 28 (such that the toes cannot get stuck in the gap) when the left traveling pedal 17 is in a rear inclined posture (posture by a two-dot chain line in Fig. 6).

The right projecting member 29 is disposed, as with the left projecting member 28, between a rotational shaft (not shown) of the right traveling operation portion 16 serving as a rotation fulcrum of the right traveling pedal 20 and the operator's seat 10, and specifically at a position corresponding to the right traveling pedal 20 and between the peripheral wall 27 and the operator's seat 10. The right projecting member 29 has an apex portion 29A formed in a triangle block projecting from the upper surface of the central mat portion 23 and tapering from the operator's seat 10 toward the rotation fulcrum of the right traveling pedal 20 (the rotational shaft of the right traveling operation portion 16) . An upper surface of the right projecting member 29 is not in contact with the sole of the operator's foot/feet during normal operations. The right projecting member 29 inhibits the operator's toes from getting stuck in a large gap formed between the rear end 20A of the right traveling pedal 20 and the floor mat 22 after the right traveling lever 21 is operated in a forward direction to allow the right traveling pedal 20 to be in the front inclined posture. The length of the right projecting member 29 projecting from the upper surface of the central mat portion 23 is set to be equal to the length of the left projecting member 28 projecting.

Herein, the left projecting member 28 is disposed at a position so as to be covered on the rear end 17B side of the left traveling pedal 17 in a top face view. Specifically, the rear end 17B of the left traveling pedal 17 corresponds to a rear end of the left projecting member 28 (an end surface located closest to the operator's seat 10 side) when the left traveling pedal 17 is in a front inclined posture. In this case, the rear end of the left projecting member 28 is not necessarily directly opposed at a position of the rear end 17B of the left traveling pedal 17 in the front inclined posture, and it may be closer to the rotational shaft 15A side or to the operator's seat 10 side. The right projecting member 29 is disposed at a position so as to be covered on the rear end 20A side of the right traveling pedal 20 in a top face view. Specifically, the rear end 20A of the right traveling pedal 20 corresponds to a rear end of the right projecting member 29 (the end surface located closest to the operator's seat 10 side) when the right traveling pedal 20 is in the front inclined posture. This configuration can inhibit the operator's feet (toes) from catching on the left projecting member 28 or the right projecting member 29 when the operator walks on the floor mat 22. In addition, the left projecting member 28 has an apex portion 28A tapering from the operator's seat 10 toward the rotation fulcrum of the left traveling pedal 17 while the right projecting member 29 has an apex portion 29A tapering from the operator's seat 10 toward the rotation fulcrum of the right traveling pedal 20. This configuration can inhibit earth and sand falling onto the floor mat 22 from accumulating around the left projecting member 28 or the right projecting member 29 when the earth and sand move from the front end 23A side of the central mat portion 23 along the inclined surface 23C to the rear end 23B side.

The hydraulic excavator 1 of the first embodiment is configured as described above, and the operator opens the door 6B of the cab 6 and rides on the cab 6 through the entrance way 6A. Then, the operator gets seated in the operator's seat 10, and manually operates the left traveling lever 18 and the right traveling lever 21, for example, in a forward direction. This mechanism allows a pilot signal to be outputted from the pilot valve 13 to the control valve, and pressurized oil discharged from the hydraulic pump to be supplied to the forward side of the left traveling motor 2A or the right traveling motor. Thus, the hydraulic excavator 1 travels forward in response to the operation of the left traveling lever 18 and the right traveling lever 21.

Herein, the left traveling pedal 17 is in a front inclined posture (posture shown by a chain line in Fig. 6) when the left traveling lever 18 is operated in a forward direction, resulting in a large gap formed between the rear end 17B of left traveling pedal 17 and the floor mat 22. Likewise, the right traveling lever 21 is operated in a forward direction, resulting in a large gap formed between the rear end 20A of the right traveling pedal 20 and the floor mat 22. Thus, in a case where the operator's toes get stuck in these gaps, smooth operation of the left traveling lever 18 or the right traveling lever 21 is inhibited.

On the other hand, in this embodiment, the left projecting member 28 corresponding to the left traveling pedal 17 and the right projecting member 29 corresponding to the right traveling pedal 20 are provided adjacent to each other between the peripheral wall 27 of the floor mat 22 and the operator's seat 10. Accordingly, the left projecting member 28 can inhibit the operator's toes from getting stuck in a large gap formed between the rear end 17B of the left traveling pedal 17 and the floor mat 22, if any, by allowing the toes to abut the left projecting member 28. Likewise, the right projecting member 29 can inhibit the operator's toes from getting stuck in a large gap formed between the rear end 20A of the right traveling pedal 20 and the floor mat 22, if any, by allowing the toes to abut the right projecting member 29. Consequently, the left traveling lever 18 and the right traveling lever 21 can constantly be operated in a smooth and accurate manner, and the traveling operation of the hydraulic excavator 1 can properly be controlled using the left traveling lever 18 and the right traveling lever 21.

In this case, the left projecting member 28 is disposed at a position so as to be covered on the rear end 17B side of the left traveling pedal 17 in a top face view, while the right projecting member 29 is disposed at a position so as to be covered on the rear end 20A side of the right traveling pedal 20 in a top face view. This configuration can inhibit the operator's feet (toes) from carelessly catching on the left projecting member 28 or the right projecting member 29 when the operator walks on the floor mat 22.

Further, the left projecting member 28 has an apex portion 28A tapering from the operator's seat 10 toward the rotation fulcrum of the left traveling pedal 17 while the right projecting member 29 has an apex portion 29A tapering from the operator's seat 10 toward the rotation fulcrum of the right traveling pedal 20. This configuration can inhibit earth and sand falling onto the floor mat 22 from accumulating around the left projecting member 28 or the right projecting member 29 when the earth and sand move from the front end 23A side of the central mat portion 23 along the inclined surface 23C to the rear end 23B side.

Thus, the hydraulic excavator 1 of the construction machine according to this embodiment includes: a self-propelled vehicle body; an operator's seat 10 provided on the vehicle body; a floor member 9 forming a foothold on the periphery of the operator's seat 10; a floor mat 22 covering an upper surface of the floor member 9; and a left traveling pedal 17 and a right traveling pedal 20 provided forward of the operator's seat 10 and rotatively operated about a rotation fulcrum in the front-rear direction to control the traveling drive for the vehicle body, characterized in that the left projecting member 28 and the right projecting member 29, each projecting upward from the floor mat 22, are provided between the rotation fulcrum of the left traveling pedal 17 and the right traveling pedal 20 and the operator's seat 10 and at a position corresponding to an end portion on the operator' s seat 10 side of the left traveling pedal 17 and the right traveling pedal 20 on the floor member 9 in a top face view.

According to this configuration, the left projecting member 28 can inhibit obstructions such as the operator's toes and tools and documents falling onto the floor mat 22 from getting stuck in a gap formed between the rear end 17B of the left traveling pedal 17 and the floor mat 22. On the other hand, the right projecting member 29 can inhibit obstructions from getting stuck in a gap formed between the rear end 20A of the right traveling pedal 20 and the floor mat 22. Consequently, the left traveling lever 18 and the right traveling lever 21 can constantly be operated in a smooth and accurate manner.

In the embodiment, the floor member 9 is provided with the pilot valve 13 on which the left traveling pedal 17 and the right traveling pedal 20 are mounted and outputting a traveling pilot signal in response to the rotation of the left traveling pedal 17 and the right traveling pedal 20, the floor mat 22 is provided with the pilot valve insert opening 26 located forward of the operator's seat 10 and into which the pilot valve 13 is inserted and the peripheral wall 27 rising upward from a peripheral portion of the pilot valve insert opening 26, and the left projecting member 28 and the right projecting member 29 are disposed between the peripheral wall 27 of the floor mat 22 and the operator' s seat 10. This configuration allows the peripheral wall 27 to inhibit earth and sand falling onto the floor mat 22 from scattering to the pilot valve 13 through the pilot valve insert opening 26, and allows the left projecting member 28 and the right projecting member 29 to inhibit obstructions such as the toes of an operator operating the left traveling lever 18 and the right traveling lever 21 from getting stuck in a gap between the floor mat 22, and the left traveling pedal 17 and the right traveling pedal 20. In addition, the left projecting member 28 and the right projecting member 29 are disposed not to be formed continuously with the peripheral wall 27, but at a constant interval rearward of the peripheral wall 27. This configuration can secure a surface on which earth and sand accumulate between the left projecting member 28 and the right projecting member 29, and the peripheral wall 27 such that an upper end of the peripheral wall 27 projects from the surface on which the earth and sand accumulate. Consequently, this configuration assuredly allows the peripheral wall 27 to inhibit the earth and sand from scattering to the pilot valve 13 side through the pilot valve insert opening 26.

In the embodiment, the left projecting member 28 and the right projecting member 29 are provided on the floor mat 22. This configuration allows the left projecting member 28 and the right projecting member 29 to inhibit obstructions from getting stuck in a gap formed between the left traveling pedal 17 and the right traveling pedal 20, and the floor mat 22 only by mounting the floor mat 22, in place of an existing floor mat, on the floor member 9.

In the embodiment, the floor mat 22 has the inclined surface 23C running downward from the rotation fulcrum of the left traveling pedal 17 and the right traveling pedal 20 toward the operator's seat 10. Further, the left projecting member 28 and the right projecting member 29 has apex portions 28A and 29A, respectively, tapering from the operator's seat 10 toward the rotation fulcrum of the left traveling pedal 17 and the right traveling pedal. In other words, the left projecting member 28 and the right projecting member 29 are formed so as to taper forward as a reference plane of the floor mat 22 gets higher (narrower) and enlarge rearward as the reference plane of the floor mat 22 gets lower (wider) . This configuration can inhibit earth and sand falling onto the floor mat 22 from accumulating around the left projecting member 28 or the right projecting member 29 when the earth and sand move from the front end 23A side of the central mat portion 23 along the inclined surface 23C to the rear end 23B side. Therefore, some degree of cleaning on the floor mat 22 can be maintained, a wide rear end surface (guard surface) of the left projecting member 28 and the right projecting member 29 can be secured, and it is possible to assuredly inhibit obstructions from getting stuck in a gap between the left traveling pedal 17 or the right traveling pedal 20 and the floor mat 22.

In the embodiment, the left projecting member 28 is disposed at a position so as to be covered with the left traveling pedal 17 in a top face view while the right projecting member 29 is disposed at a position so as to be covered with the right traveling pedal 20 in a top face view. This configuration allows for a wider space around the feet of the operator seated in the operator's seat 10. In addition, this configuration can inhibit the feet (toes) from catching on the left projecting member 28 or the right projecting member 29 when the operator walks on the floor mat 22.

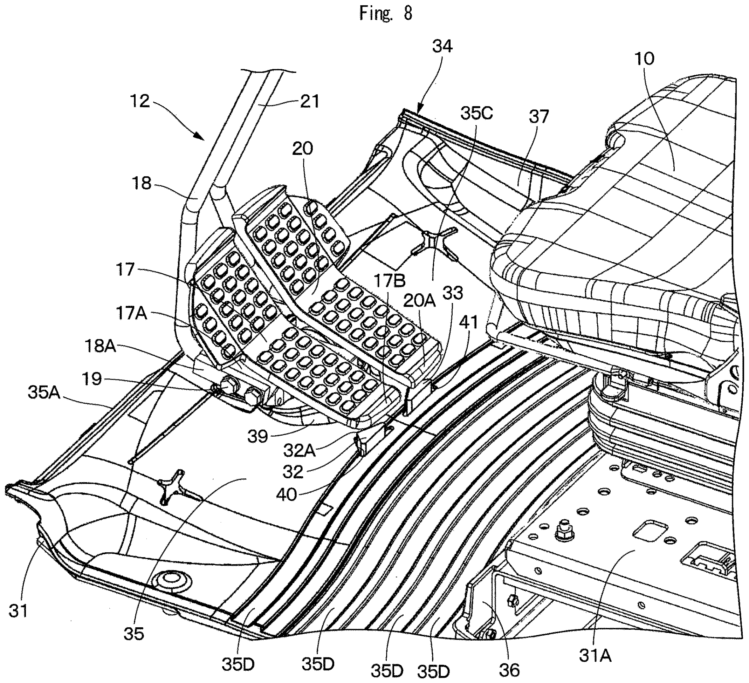

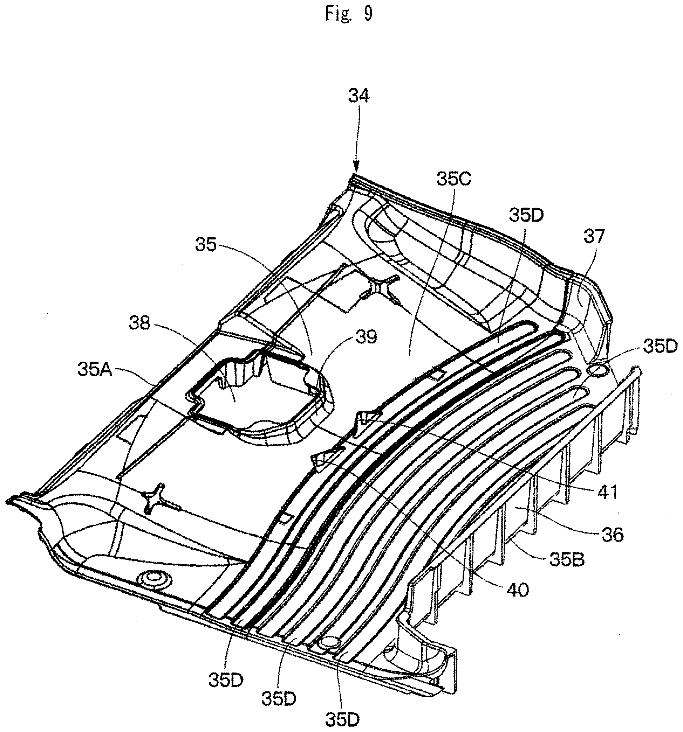

Subsequently, Figs. 8 and 9 show a second embodiment of the present invention, and this embodiment is characterized in that left and right projecting members are provided on a floor member. In this embodiment, the component elements that are identical to those of the foregoing first embodiment will be simply denoted by the same reference numerals to avoid repetitions of similar explanations.

A floor member 31 according to the second embodiment, as with the floor member 9 according to the first embodiment, forms a foothold for an on-board operator in the cab 6, and an operator's seat support platform 31A supporting the operator's seat 10 is provided rearward of the floor member 31. However, the floor member 31 is different from the floor member 9 according to the first embodiment in that a left projecting member 32 located between the rotation fulcrum of the left traveling pedal 17 and the operator's seat 10 and a right projecting member 33 located between the rotation fulcrum of right traveling pedal 20 and the operator's seat 10 are provided on the floor member 31.

The left projecting member 32 is located between the rotation fulcrum of the left traveling pedal 17 (the rotational shaft 15A of the left traveling operation portion 15) and the operator's seat 10 and provided on an upper surface of the floor member 31. The left projecting member 32 has an apex portion 32A formed in a triangular prism extending upward from the upper surface of the floor member 31 and tapering from the operator's seat 10 toward the rotation fulcrum of the left traveling pedal 17. The left projecting member 32 projects from a floor mat 34 through a left projecting member through hole 40 of the later-described floor mat 34 to inhibit the operator's toes from getting stuck in a gap formed between the rear end 17B of the left traveling pedal 17 and the floor mat 34. In addition, the left projecting member 32 is disposed at a position so as to be covered on the rear end 17B side of the left traveling pedal 17 in a top face view.

The right projecting member 33 is located between the rotation fulcrum of the right traveling pedal 20 (the rotational shaft of the right traveling operation portion 16) and the operator's seat 10 and provided on the upper surface of the floor member 31. The right projecting member 33 has an apex portion (not shown) formed in a triangular prism extending upward from the upper surface of the floor member 31 and tapering from the operator's seat 10 toward the rotation fulcrum of the right traveling pedal 20. The right projecting member 33 projects from the floor mat 34 through a right projecting member through hole 41 of the floor mat 34 to inhibit the operator's toes from getting stuck in a gap formed between the rear end 20A of the right traveling pedal 20 and the floor mat 34. In addition, the right projecting member 33 is disposed at a position so as to be covered on the rear end 20A side of the right traveling pedal 20 in a top face view.

The floor mat 34 is disposed forward of the operator's seat 10 to cover the upper surface of the floor member 31. The floor mat 34, as with the floor mat 22 according to the first embodiment, is configured to include a central mat portion 35, a rear wall 36, a right wall 37, a pilot valve insert opening 38, and a peripheral wall 39 (see Fig. 9) . The central mat portion 35 has an inclined surface 35C running downward from a front end 35A toward a rear end 35B, and a plurality of grooves 35D gradually curved and extending in the right-and-left direction is provided on the rear end 35B side on the upper surface of the central mat portion 35. However, the floor mat 34 is different from the floor mat 22 according to the first embodiment in that the later-described left projecting member through hole 40 and a right projecting member through hole 41 are provided in place of the left projecting member 28 and the right projecting member 29 according to the first embodiment.

A left projecting member through hole 40 and a right projecting member through hole 41 are provided at the central mat portion 35 of the floor mat 34. The left projecting member through hole 40 is formed as a triangle through hole corresponding to the left projecting member 32 at a position corresponding to the left projecting member 32 of the floor member 31, that is, at a position so as to be covered on the rear end 17B side of the left traveling pedal 17 in a top face view. The right projecting member through hole 41 is formed as a triangle through hole corresponding to the right projecting member 33 at a position corresponding to the right projecting member 33 of the floor member 31, that is, at a position so as to be covered on the rear end 20A side of the right traveling pedal 20 in a top face view.

Accordingly, the left projecting member 32 of the floor member 31 projects on the upper surface side of the floor mat 34 through the left projecting member through hole 40 of the floor mat 34, with the floor mat 34 disposed on the upper surface of the floor member 31. Likewise, the right projecting member 33 of the floor member 31 projects on the upper surface side of the floor mat 34 through the right projecting member through hole 41 of the floor mat 34.

The hydraulic excavator according to the second embodiment has the floor member 31 and the floor mat 34 as described above, and the left projecting member 32 can inhibit the operator's toes from getting stuck in a large gap formed between the rear end 17B of the left traveling pedal 17 and the floor mat 34, if any, by allowing for the operation of the left traveling lever 18 in a forward direction. Likewise, the right projecting member 33 can inhibit the operator's toes from getting stuck in a large gap formed between the rear end 20A of the right traveling pedal 20 and the floor mat 34, if any, by allowing for the operation of the right traveling lever 21 in the forward direction.

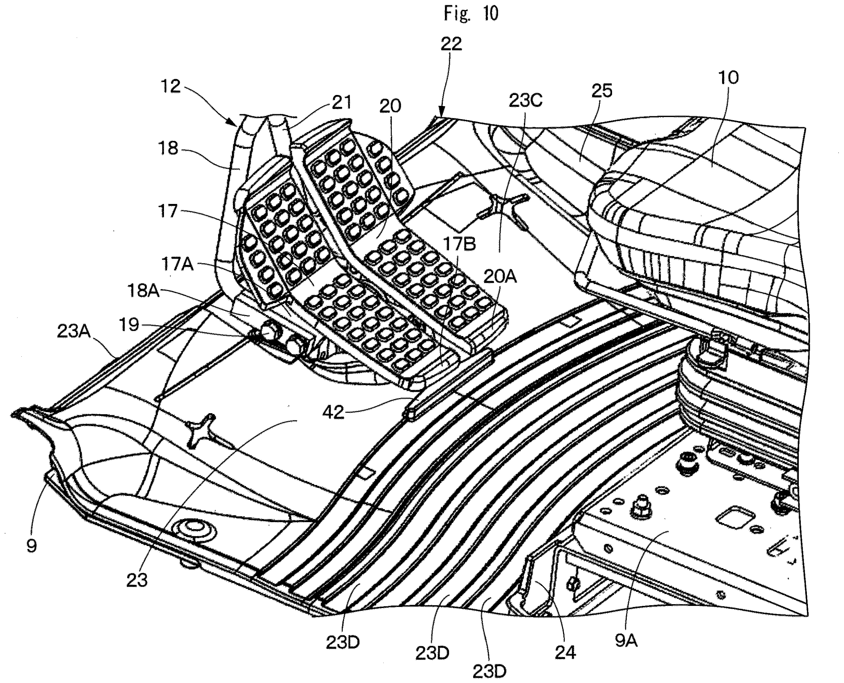

In the first embodiment, the case where the left projecting member 28 and the right projecting member 29 are disposed adjacent to each other on the upper surface of the floor mat 22 is illustrated. However, the present invention is not limited to that, and a single projecting member 42 may be provided at a position corresponding to the left traveling pedal 17 and the right traveling pedal 20, as in a modification shown in Fig. 10. That is, the projecting member 42 extending in the right-and-left direction may be configured to be provided at a position so as to be covered with the rear end 17B side of the left traveling pedal 17 and the rear end 20A side of the right traveling pedal 20 in a top face view to allow the projecting member 42 to inhibit the operator's toes from getting stuck in a gap formed between the left traveling pedal 17 and the right traveling pedal 20, and the floor mat 22.

In the first embodiment, the case where the left projecting member 28 and the right projecting member 29 are formed in a triangular block is illustrated. However, the present invention is not limited to that, and such a left projecting member 28 and a right projecting member 29 may be formed in a rhomboid or elliptical block, for example. This applies to the left projecting member 32 and the right projecting member 33 according to the second embodiment.

In addition, in the embodiment, the hydraulic excavator 1 including the left traveling pedal 17 integrated with the left traveling lever 18 and the right traveling pedal 20 integrated with the right traveling lever 21 is illustrated. However, the present invention is not limited to that, and may be employed in, for example, wheel type construction machines including a single pedal having no integral lever. Moreover, not limited to a traveling pedal, a construction machine may be configured to include a projecting member inhibiting obstructions from getting stuck in a gap between a brake pedal and a floor mat, for example.

Moreover, in one embodiment of the present invention, a rear ultra small sized revolving hydraulic excavator 1 with a crawler (crawler belt)-type lower traveling structure 2 as a construction machine is illustrated. However, the present invention is not limited to that, and can be widely employed for crawler-type hydraulic excavators other than rear ultra small sized revolving hydraulic excavators, wheel-type hydraulic excavators, and other types of construction machines such as hydraulic cranes including a traveling operation device having a traveling pedal and a traveling lever.

### DESCRIPTION OF REFERENCE NUMERALS

2: Lower traveling structure (Vehicle body)
3: Upper revolving structure (Vehicle body)
9, 31: Floor member
12: Traveling operation device
13: Pilot valve
15A: Rotational shaft (Rotation fulcrum)
17: Left traveling pedal
20: Right traveling pedal
22, 34: Floor mat
23C, 35C: Inclined surface
26, 38: Pilot valve insert opening
27, 39: Peripheral wall
28, 32: Left projecting member
28A, 29A, 32A: Apex portion
29, 33: Right projecting member
40: Left projecting member through hole
41: Right projecting member through hole
42: Projecting member

## Claims

1. A construction machine comprising: a self-propelled vehicle body; an operator's seat provided on the vehicle body; a floor member forming a foothold on the periphery of the operator's seat; a floor mat covering an upper surface of the floor member; and a pedal provided forward of the operator's seat and rotatively operated about a rotation fulcrum in the front-rear direction to control the traveling drive for the vehicle body, wherein
a projecting member projecting upward from the floor mat is provided between the rotation fulcrum of the pedal and the operator's seat and at a position corresponding to an end portion on the operator's seat side of the pedal on the floor member in a top face view.

2. The construction machine according to claim 1, wherein
the floor member is provided with a pilot valve to which the pedal is mounted and outputting a traveling pilot signal in response to the rotation of the pedal, wherein
a pilot valve insert opening located forward of the operator's seat and into which the pilot valve is inserted and a peripheral wall rising upward from a peripheral portion of the pilot valve insert opening are provided on the floor mat, wherein
the projecting member is disposed between the peripheral wall of the floor mat and the operator's seat.

3. The construction machine according to claim 1, wherein
the projecting member is provided on the floor mat.

4. The construction machine according to claim 1, wherein
the projecting member is provided on the floor member, and
a projecting member through hole penetrating in the vertical direction and into which the projecting member is inserted is provided on the floor mat.

5. The construction machine according to claim 1, wherein
the floor mat has an inclined surface running downward from the rotation fulcrum of the pedal toward the operator's seat, and
the projecting member has an apex portion tapering from the operator's seat toward the rotation fulcrum of the pedal.

6. The construction machine according to claim 1, wherein
the projecting member is located so as to be covered with the pedal in a top face view.

7. The construction machine according to claim 1, wherein
the pedal is configured to be movable between a neutral position where the pedal is in a non-operating state, a front inclined position where the pedal rotates forward about the rotation fulcrum relative to the neutral position and a rear inclined position where the pedal rotates rearward about the rotation fulcrum relative to the neutral position.
